# EUROPÄISCHE PATENTSCHRIFT

(11) **EP 1 386 017 B1**
(45) Veröffentlichungstag und Bekanntmachung des Hinweises auf die Patenterteilung: **07.05.2008**
(21) Anmeldenummer: 02737786.0
(22) Anmeldetag: 12.03.2002
(51) Int. Cl.: C23C 4/00

(54) **WÄRMEDÄMMSCHICHT AUF BASIS VON La2 Zr2 O7 FÜR HOHE TEMPERATUREN**
HEAT INSULATING LAYER BASED ON LA2 ZR2 O7 FOR HIGH TEMPERATURES
COUCHE CALORIFUGE A BASE DE LA2 ZR2 O7 POUR HAUTES TEMPERATURES

(30) Priorität: 03.04.2001 DE 10116597; 29.11.2001 DE 10158639
(43) Veröffentlichungstag der Anmeldung: 04.02.2004
(73) Patentinhaber: Forschungszentrum Jülich GmbH, 52425 Jülich (DE)
(72) Erfinder: VASSEN, Robert, 52134 Herzogenrath (DE); LEHMANN, Henry, D-70435 Stuttgart (DE); DIETRICH, Markus, d-63486 Bruchköbel (DE); CAO, Xueqiang, Renmin Street 159 130022 Changchun Jilin (CN); STÖVER, Detlev, 52382 Niederzier (DE); PRACHT, Gerhard, 52428 Jülich (DE)
(86) Internationale Anmeldenummer: PCT/DE2002/001355
(87) Internationale Veröffentlichungsnummer: WO 2002/081768

(56) Entgegenhaltungen:
- WO-A-99/42630

## Beschreibung

Die Erfindung betrifft eine Wärmedämmschicht für hohe Temperaturen, insbesondere für Temperaturen über 1300 °C, auf Basis von La₂Zr₂O₇.

### Stand der Technik

Wärmedämmstoffe für hohe Temperaturen werden beispielsweise in den Gasturbinen von Flugtriebwerken und Wärmekraftwerken dazu verwendet, die heißen Teile, also insbesondere die Turbinenschaufeln und Brennkammern, gegen die große thermische Belastung durch die heißen Gase zu schützen. Die Wärmedämmschichten sind während der Betriebsdauer der Turbine, die von einigen Stunden im Spitzenlastbetrieb bis zu einem Jahr im Grundlastbetrieb reichen kann, durchgehend sehr hohen Temperaturen ausgesetzt. Der Wirkungsgrad von Gasturbinen hängt von der Turbineneintrittstemperatur des Verbrennungsgases ab, die derzeit bei über 1300 °C liegen. Höhere Gastemperaturen von 1400 °C und mehr können zwar erzeugt werden, sind aber derzeit nicht nutzbar, da die bekannten Materialien, die für die heißen Teile verwendet werden, die damit verbundenen hohen Temperaturen von über 1200 °C nicht lange genug verkraften können. Derzeit werden die besten Ergebnisse mit Bauteilen erzielt, die gerichtet erstarrte oder noch besser einkristalline Nickelbasis-Superlegierungen als Substrat aufweisen, auf das eine Wärmedämmschicht aufgebracht ist, die aus durch Zusatz von Yttriumoxid Y₂0₃ teilstabilisiertem Zirkoniumdioxid Zr0₂ (abgekürzt mit YSZ) besteht.

Bei höheren Oberflächentemperaturen von beispielsweise 1300 °C und mehr erfolgt jedoch ein Nachsintern der YSZ-Schichten, wodurch sich eine Verschlechterung der thermomechanischen Eigenschaften ergibt, wie zum Beispiel eine Erhöhung der Temperaturleitfähigkeit sowie des Elastizitätsmoduls und eine Verringerung der quasiplastischen Eigenschaften durch die Versinterung des Rißnetzwerkes.

Weiterhin besteht eine Schwierigkeit darin, daß eine Erhöhung der Oberflächentemperatur der Wärmedämmschicht bei gleicher Schichtdicke der Wärmedämmschicht und gleicher Wärmeleitfähigkeit dieser Schicht auch eine Erhöhung der Temperatur des darunter befindlichen Metallsubstrates mit sich führt, was nachteilig zu einer deutlichen Verringerung der Lebensdauer des Bauteils führt.

Dementsprechend sind als Ersatz für Wärmedämmstoffe aus YSZ vor allem Werkstoffe von Interesse, die gegenüber dem YSZ eine geringere Wärmeleitfähigkeit aufweisen, wie beispielsweise das La₂Zr₂O₇. Das Zirkonat hat jedoch den Nachteil, daß es im Vergleich zur metallischen Komponente einen nur geringen thermischen Ausdehnungskoeffizienten aufweist, der bei thermischen Wechselbelastungen regelmäßig zu spannungsinduzierten Versagemechanismen führt.

In JP-A-07 292 453 wird eine Wärmedämmbeschichtung offenbart, die dazu dient, in Kontakt mit heißen Gasen stehende Metallteile, wie zum Beispiel die Laufschaufeln und die Leitschaufeln von Gasturbinen, gegen Hochtemperatur-Oxidation zu schützen. Diese Wärmedämmbeschichtung wird dadurch auf das Metallteil aufgebracht, daß es zunächst unter Verwendung von Niederdruck-Plasmaspritzen mit MCrAlY (M steht für Ni und/oder Co) beschichtet wird, daß dann diese Schicht unter Verwendung von atmosphärischem Plasmaspritzen mit Zr0₂-Y₂0₃ beschichtet wird, und daß schließlich eine anorganische Glasur auf die Zr0₂-Y₂0₃-Schicht aufgestrichen und dann gebrannt oder direkt thermisch aufgespritzt wird.

Die SU-A 305 152 offenbart einen feuerfesten Zement, der Strontiumaluminat und Strontiumzirkonat enthält. Der Zement wird dadurch erhalten, daß eine Mischung, die 46,15 bis 46,62 Gew.-% Sr0, 43,46 bis 48,89 Gew.-% Zr0₂ und 4,96 bis 9,92 Gew.-% Al₂0₃ enthält, bei 1400 bis 1500 °C gebrannt wird. Der resultierende Zement enthält 10 bis 20 Gew.-% SrOAl₂0₃ und 80 bis 90 Gew.-% SrOZr0₂ und schmilzt bei 2200 bis 2300 °C.

Die JP-A-50 035 011 offenbart eine feuerfeste Beschichtung für Transportwalzen in einem Blankglühofen, bei der Kalziumzirkonat zum Schutz der Walze gegen Eisenoxide verwendet wird. Diese Beschichtung wird dadurch hergestellt, daß die Walze unter Verwendung von Plasmaspritzen nacheinander mit Ni-Cr Pulver, mit einer Mischung aus 70 Gew.-% Ni-Cr und 30 Gew.-% CaZr0₃ und mit CaZr0₃-Pulver beschichtet wird. Es wird darin festgestellt, daß diese Beschichtung nicht durch Eisenoxide attackiert wird, wohingegen diejenigen Walzen, die mit Al₂0₃, Al₂Mg0₄, Zr0₂ oder MgZr0₃ beschichtet sind, eine deutliche Reaktion mit Eisenoxiden zeigen.

Die DE-A-4210 397 offenbart einen Temperatursensor für Verbrennungsgase, der aus SrZr0₃ besteht und durch Sputtern oder Siebdruck auf ein Substrat aufgebracht wird.

In DE 198 01 424 werden Oxide mit einer Pyrochlor- oder Perowskitstruktur als Wärmedämmstoffe für den Einsatz bei Temperaturen oberhalb von 1000 °C vorgeschlagen. Die dort genannten Wärmedämmstoffe weisen im wesentlichen ein Zirkonat oder eine Mischung aus Zirkonaten aus. Insbesondere werden dort BaZr0₃, La₂Zr₂O₇ und SrZrO₃ angegeben.

Aus WO 01/23642 A2 ist ein metallisches Turbinenbauteil mit einer darauf angeordneten wärmedämmenden Beschichtung aus z. B. La₂Hf₂O bekannt. Zwischen dem Bauteil und der wärmedämmenden Schicht kann eine metallische McrAlY-Legierungsschicht als Unterschicht angeordnet sein (M = Fe, Co, Ni sowie Mischungen daraus).

In WO 99/23270 wird ein Erzeugnis mit einem Schichtsystem zum Schutz gegen ein heißes aggressives Gas offenbart. Das Schichtsystem umfasst eine Haftschicht aus einer McrAlY-Legierung (M = Fe, Co, Ni sowie Mischungen daraus), mit 0,1 bis 10 % Lanthan und 0 bis 10 % Hafnium. Als eigentliche Wärmedämmschicht wird unter anderem La₂Zr₂O₇ und La₂Hf₂O₇ genannt.

### Aufgabe und Lösung

Es ist Aufgabe der vorliegenden Erfindung weitere besonders geeignete Wärmedämmschichten auf der Oberfläche eines metallischen Substrates zur Verfügung zu stellen, die den Einsatz bei höheren Temperaturen, insbesondere oberhalb von 1300 °C ermöglichen, und die einen größeren thermischen Ausdehnungskoeffizienten als reines La₂Zr₂O₇ aufweisen.

Die Aufgabe wird gelöst durch eine Wärmedämmschicht mit der Gesamtheit der Merkmale des Hauptanspruchs. Die Aufgabe wird zudem gelöst durch weitere Wärmedämmschichten mit der Gesamtheit der Merkmale gemäß einem der Nebenansprüche 3, 6 und 8. Vorteilhafte Ausgestaltungen der Wärmedämmschichten finden sich in den jeweils darauf rückbezogenen Unteransprüchen.

### Gegenstand der Erfindung

Der Gegenstand der vorliegenden Erfindung ist eine Wärmedämmschicht, die auf der Oberfläche eines metallischen Substrates angeordnet ist, und die im wesentlichen auf einem La₂Zr₂O₇ basiert, welches der allgemeinen Formel A₂B₂O₇ zugerechnet und in der Pyrochlorstruktur kristallisiert wird. Bei der erfindungsgemäßen Wärmedämmschicht gemäß Anspruch 1 sind die Kationen der A-Position, d. h. das Lanthan, ganz oder zumindest teilweise substituiert. Geeignete Kationen für die Substitution des Lanthans sind dabei die Seltenerd-Elemente Neodym (Nd), Dysprosium (Dy), Europium (Eu) und Samarium (SM).

Im Rahmen der Erfindung hat sich überraschend herausgestellt, daß sich durch eine teilweise Substitution des Lanthans auf dem A-Platz durch die Seltenerd-Elemente Nd, Dy, Sm oder Eu mit relativ geringen Bindungsenergien der thermischen Ausdehnungskoeffizient α vorteilhaft erhöhen läßt.

Als zudem besonders vorteilhaft in ihren Eigenschaften haben sich Wärmedämmschichten herausgestellt, die ebenfalls im wesentlichen auf einem La₂Zr₂O₇ basieren und bei denen die B-Position, d. h. das Zirkon, ganz oder teilweise durch Cer (CE), Hafnium (HF) oder Tantal (Ta) substituiert ist. Dabei nimmt Cer eine Sonderstellung ein, da La₂Ce₂O₇ in der für Wärmedämmschichtanwendungen ebenfalls günstigen Fluoritstrutkur kristallisiert. Eine solche vorteilhafte Wärmedämmschicht ist Gegenstand des Anspruchs 3.

Im Rahmen dieser Erfindung ist unter dem Begriff Substitution zu verstehen, dass wenigstens 5 % des substituierten Elementes, insbesondere des Lanthans und/oder des Zirkons, durch ein anderes Element ersetzt wird. Geringfügige Fremdzusätze, die herstellungsbedingt erfolgen und typischerweise in einer Größenordnung von bis zu 3 Gew.-% vorliegen können, sind ausdrücklich nicht mit einer Substitution gemeint. Ausserdem bedeutet der Begriff Substitution nicht ausschließlich nur eine stöchiometrische Substitution. Insbesondere im Fall des Austausches von Zirkon durch Cer gilt auch eine überstöchiometrische Substitution mit bis zu 100 % Cerüberschuss als von der Erfindung mit umfasst. So zeigte beispielsweise eine Schicht aus La_{1,96}Ce_{2,04}O_{7,02} ein Zyklierverhalten, welches dem einer YSZ-Schicht deutlich überlegen war. Zur Herstellung einer solchen Schicht über das Plasmaspritzen ist in dem Ausgangspulver ein höherer Cergehalt als letztlich in der Schicht gewünscht vorzusehen.

Eine Substitution von Zirkon durch Cer auf dem B-Platz bewirkt ebenfalls einen deutlichen Anstieg des thermischen Ausdehnungskoeffizienten α. Bei der vollständigen Substitution des Zirkons durch Hafnium beobachtet man praktisch keinen Effekt auf die thermische Dehnung, jedoch ergibt sich bei diesem Werkstoff-System vorteilhaft eine Absenkung der Wärmeleitfähigkeit λ bei einer teilweisen Substitution. Durch einige wenige Versuche kann diese durch eine geeignete Variation des Hf/Zr-Verhältnisses optimiert werden. Vielversprechend hat sich dabei das Verhältnis von Hf/Zr = 1 herausgestellt. Eine 50%-ige Substitution des Zirkons durch Cer oder Hafnium erscheint nach ersten Untersuchungen allgemein als besonders vorteilhaft. Nach theoretischen Überlegungen sollte sich der größte Effekt zumindest für die Wärmeleitfähigkeit λ bei einer 1:1 Mischung ergeben.

Dieser Effekt wird auch bei anderen erfindungsgemäß substituierten Wärmedämmstoffen sichtbar und beruht auf der stärkeren Streuung der Gitterschwingungen in Kristallen mit hohen Massenunterschieden. Sehr wirksam bei der Reduzierung von λ ist auch die Einbringung fünfwertiger, schwerer Ionen wie Ta. Hier ist aufgrund der Phasenstabilität jedoch nur eine Substitution von maximal 18 mol-% möglich, da es darüber hinaus nicht mehr zur Ausbildung einer vorteilhaften Pyrochlorstruktur kommt.

### Spezieller Beschreibungsteil

Angestrebt werden Wärmedämmschichten, die einerseits einen hohen thermischen Ausdehnungskoeffizienten α aufweisen, der ähnlich dem eines metallischen Substrates ist, welches durch die Wärmedämmschicht geschützt werden soll, und andererseits eine geringe Wärmeleitfähigkeit λ aufweisen, um eine Wärmeübertragung auf das Substrat möglichst zu verringern.
Die vorliegende Erfindung besteht darin, in einem Oxid mit der allgemeinen Summenformel A₂B₂0₇, speziell in La₂Zr₂O₇ die Elemente in der A und/oder B Position gezielt zu substituieren, um die Eigenschaften der Wärmedämmschicht zu optimieren.

Daraus resultieren Wärmedämmschichten aus einem Material mit der allgemeinen Summenformel A₂₋ₓA'ₓB_{2-y}B'_{y}0_{7±z}, wobei x und y jeweils kleiner als 2 sind. Im Sonderfall B = Cer ist aber auch y > 2 zugelassen. Bei der Substitution von Kationen durch Kationen größerer oder kleinerer Wertigkeit, ändert sich auch die Zahl der Sauerstoffionen pro Formeleinheit, was durch den Faktor z berücksichtigt wird. Insbesondere konnte durch diese Substitution eine Verringerung der Wärmeleitfähigkeit (λ) und in vielen Fällen eine Erhöhung des thermischen Ausdehnungskoeffizienten (α) erzielt werden.

In der Folge wird auf die Werkstoffeigenschaften im einzelnen eingegangen.

### Schmelztemperatur

Verbindungen mit der Summenformel A₂B₂O₇ (mit B = Zr, Hf, Ce oder Mischungen derselben), insbesondere Pyrochlore, deren Kationen hauptsächlich 4d, 5d und 4f Metalle sind, besitzen einen hohen Schmelzpunkt (>2000°C), z. B. Nd₂Zr₂0₇ und La₂Hf₂0₇. Diese Eigenschaft ist häufig ein Maß für die Stabilität der Verbindung, sowie in vielen Fällen ein Hinweis auf eine geringe Sinterneigung. Eine geringe Sinterneigung in Wärmedämmschichten ist von Vorteil, um die poröse Mikrostruktur der Schicht aufrecht zu erhalten. Ein Einfluß der Substitution der Kationen auf die Hochtemperaturbeständigkeit der Pyrochlore wurde bisher nicht beobachtet.

### Phasenstabilität der Pyrochlore

Die angesprochenen Pyrochlore weisen häufig keine Phasenumwandlung unterhalb 1400°C auf. Diese Phasenstabilität kann in vielen Fällen auch nach der Substitution von Kationen beibehalten werden.

### Wärmeleitfähigkeit (λ)

Um eine verbesserte Wärmedämmung zu erzielen, sollten neue Wärmedämmschicht-Materialien ein kleineres λ aufweisen als das heute eingesetzte YSZ (2,2 W/mK). Die Wärmeleitfähigkeit eines Materials kann heute noch nicht exakt vorhergesagt werden. Tendenziell wird sie jedoch durch komplexe Strukturen, hohe Defekt bzw. Leerstellenkonzentration in der Struktur und eine große Massendifferenz zwischen Kationen und Anionen verringert. Für x = 1 konnte regelmäßig eine besonders gute Absenkung der Wärmeleitfähigkeit erreicht werden. Diese Bedingungen sind durch Pyrochlore mit 4d, 5d und 4f Kationen im besonderen Maße erfüllt. So liegt die Wärmeleitfähigkeit λ von La₂Zr₂O₇ bei 1,6 W/mK, die von einer mit 30 % Eu dotierten Verbindung bei 1,2 W/mK. Durch teilweise Substitution der Kationen durch solche mit geringerer oder höherer Ladungszahl kann die Fehlstellenkonzentration im Gitter erhöht werden, was eine niedrigere Wärmeleitfähigkeit λ erwarten läßt. Durch die Substitution von 10 mol-% des Zr durch Ta (La₂Zr_{1,9}Ta_{0,1}0₇) konnte λ um ca. weitere 5% auf 1,5 W/mK gesenkt werden. Besonders effektiv ist die Substitution von Zr durch Ce, womit sich extrem niedrige Werte von etwa 1,2 W/mK ergeben.

### Thermischer Ausdehnungskoeffizient (α)

Auch der thermische Ausdehnungskoeffizient α eines Materials ist nicht exakt vorhersehbar. Von der Tendenz her steigt er jedoch im allgemeinen mit steigenden Ionenradien, schwächeren Bindungen zwischen Kationen und Anionen und einer höheren Raumerfüllung der Struktur. So kann α von La₂Zr₂0₇ (9,1*10⁻⁶ K⁻¹) durch Substitution des La durch Nd auf 10,1*10⁻⁶ K⁻¹ und durch Substitution des Zr durch Ce auf 10,3*10⁻⁶ K⁻¹ erhöht werden.
Beide Erhöhungen sind auf die geringere Bindungsenergie zurückzuführen. Noch größere α sind durch die Substituenten Sm und Eu zu erwarten, die in der Reihe der 4f-Kationen die geringste Bindungsenergie zu Sauerstoff aufweisen.
Hier gilt, je besser ein Element die Eigenschaften des Pyrochlors beeinflußt, desto größer sollte seine Konzentration sein. Im Extremfall sollten also eigentlich die A- und B-Gitterplätze mit dem jeweils optimalen Element besetzt werden, so daß man zu einfachen Pyrochloren A₂B₂0₇ kommt. Einige Elemente, wie z. B. Eu, Sm und Ta in der Kombination mit Zr oder Hf, ergeben jedoch keine Pyrochlorstruktur oder nur solche Strukturen, die bei höheren Temperaturen eine Phasenumwandlung erleiden. In diesen Fällen kann die vorgeschlagene Teilsubstitution der Kationen stabiler Pyrochlore deren Eigenschaften zusätzlich positiv beeinflussen.

Umfasst von der Erfindung sind nicht nur Substitutionen auf den A-Plätzen und auf den B-Plätzen, sondern auch beliebige Kombinationen. Dazu zählen beispielsweise die Verbindungen LaEuZrHfO₇, LaNdZrHfO₇, LaGdZrCeO₇, LaGdZr_{1,4}Ce_{0,6}O₇ und La_{1,8}Dy_{0,2}Zr_{1,4}Ce_{0,6}O₇. Aus allgemeinen Betrachtungen sollte bei der Besetzung der einzelnen Plätze eine große Massendifferenz regelmäßig zu einer verringerten Wärmeleitfähigkeit führen.

### Ausführungsbeispiele:

Nachfolgend werden beispielhaft einige Herstellungsverfahren zur Beschichtung eines Substrates mit einem erfindungsgemäßen Wärmedämmstoff aufgezeigt.

### Beispiel A) : La₂Zr_{1,9}Ta_{0,1}0_{7,05} Wärmedämmschicht (WDS)

Das La₂Zr_{1,9}Ta_{0,1}0_{7,05} wird über eine Festkörperreaktion entsprechend

La₂O₃ + 0,05 Ta₂O₅ + 1,9 ZrO₂ →La₂Zr_{1,9}Ta_{0,1}O_{7,05}

dargestellt.
Die Ausgangspulver werden in einer Kugelmühle unter Ethanol gemahlen und anschließen bei 1400 °C reaktionsgeglüht. Anschließend wird über Sprühtrocknung ein fließfähiges Pulver erzeugt. Zuerst wird dann mittels VPS (Vakuum-Pulversprühen) eine Haftvermittlerschicht aus industriell verfügbarem McrAlY-Pulver auf ein Substrat (Ni-Basislegierung) aufgebracht: Anschließend wird die Pyrochlorschicht in einer Dicke von ca. 0,3 mm mittels APS (air plasma spraying) auf die HVS gespritzt.

### Beispiel B) : LaNdZr₂0₇ - WDS

Das LaNdZr₂0₇ - Pulver wird über Sprühtrocknung einer wässrigen La(NO₃)₃-, Nd(N0₃)₃- und Zr(N0₃)₂ Lösung mit anschließendem Kalzinieren bei 1400 °C hergestellt. Aus diesem Pulver werden Ingots für den EB-PVD (electronic beam-physical vaper deposition) Prozeß gefertigt. Als HVS (Haftvermittlerschicht) kann eine über VPS (vaper plasma spraying) und anschließende Glättung hergestellte Schicht oder eine Plaxinaluminidschicht dienen: Das mit der HVS versehene Substrat wird mit Hilfe des LaNdZr₂0₇ - Ingots über EB-PVD beschichtet.

### Beispiel C): Mehrlagige oder gradierte Schicht

Nd_{1,3}Sm_{0,7}Hf₂0₇ wird wie das La₂Zr_{1,9}Ta_{0,1}0_{7,05} in Beispiel A) hergestellt. Wiederum wird dann mittels VPS eine Haftvermittlerschicht aus McrAlY-Pulver auf ein Substrat (Ni-Basislegierung) aufgebracht. Auf diese HVS wird dann mittels APS zuerst eine YSZ-Schicht aufgebracht und darauf mit der gleichen Methode eine Nd_{1,3}Sm_{0,7}Hf₂0₇ -Schicht. Ebenso ist es möglich, die zwei Oxide in einem kontinuierlichen Konzentrationsgradienten vom YSZ zum Nd_{1,3}Sm_{0,7}Hf₂0₇ zu spritzen und somit eine gradierte WDS herzustellen.

Die nachfolgende Tabelle gibt die Eigenschaften für die Wärmeleitfähigkeit λ und den thermischen Ausdehnungskoeffizienten α für einige ausgewählte Wärmedämmstoffe wieder.

| Formel | x, y Bereich | Beispiel | therm. Ausd.-koeffizient α (30-1000°C) [10⁻⁶ K⁻¹] | Wärmeleitfähigkeit λ (800°C) [W / m K] | Bemerkung |
|---|---|---|---|---|---|
| YSZ | | | 10,7 | 2,2 | SdT |
| BaZrO₃ | | BaZrO₃ | 7,9 | 3,60 | SdT |
| SrZrO₃ | | SrZrO₃ | 10,9 | - | SdT |
| La₂Zr₂O₇ | | La₂Zr₂O₇ | 8,9 bis 9,1 | 1,6 | SdT |
| La₂₋ₓGdₓZr₂O₇ | 0 < x ≤ 2 | La_{1,4}Gd_{0,6}Zr₂O₇ | 9,3 | - | SdT |
| | | Gd₂Zr₂O₇ | 10,5 | - | SdT |
| La₂₋ₓNdₓZr₂O₇ | 0 < x ≤ 2 | La_{1,4}Nd_{0,6}Zr₂O₇ | 8,7 | 1,36 | Erfindungsgemäßer Wärmedämmstoff |
| | | Nd₂Zr₂O₇ | 10,1 | 1,92 | Erfindungsgemäßer Wärmedämmstoff |
| La₂₋ₓEuₓZr_{z}O₇ | 0 < x ≤ 2 | La_{1,4}Eu_{0,6}Zr₂O₇ | 9,3 | 1,15 | Erfindungsgemäßer Wärmedämmstoff |
| La₂₋ₓDyₓZr₂O₇ | 0 < x ≤ 2 | La_{1,7}Dy_{0,3}Zr₂O₇ | 8,9 | 1,51 | Erfindungsgemäßer Wärmedämmstoff |
| La₂Zr_{2-y}Ce_{y}O₇ | 0 < y ≤ 2 | La₂ (Zr_{0,7}Ce_{0,3})₂O₇ | 9,5 | -- | Erfindungsgemäßer Wärmedämmstoff |
| | | La₂(Zr_{0,3}Ce_{0,7})₂O₇ | 10,1 | - | Erfindungsgemäßer Wärmedämmstoff |
| | | La₂Ce₂O₇ | 10,3 | - | Erfindungsgemäßer Wärmedämmstoff |
| La₂Zr_{2-y}Hf_{y}O₇ | 0 < y ≤ 2 | La₂Hf₂O₇ | 8,2 | 1,8 | SdT |
| La₂Zr_{2-1,25y}Ta_{y}O₇ | 0 < y ≤ 0,16 | La₂Zr_{1,8}Ta_{0,16}O₇ | 8,7 | 1,41 | Erfindungsgemäßer Wärmedämmstoff |

## Patentansprüche

1. Wärmedämmschicht auf Basis eines La₂Zr₂O₇, welche auf der Oberfläche eines metallischen Substrates angeordnet ist, **gekennzeichnet durch** eine 10 bis 90 % Substitution des Lanthans **durch** Neodym, Dysprosium, Samarium oder Europium.

2. Wärmedämmschicht nach vorhergehendem Anspruch 1, **gekennzeichnet durch** eine 50 %ige Substitution des Lanthans **durch** Neodym, Dysprosium, Samarium oder Europium.

3. Wärmedämmschicht basierend auf einem La₂Zr₂O₇, welcher auf der Oberfläche eines metallischen Substrates angeordnet ist, insbesondere nach Anspruch 1 oder 2, bei dem Zirkon teilweise oder vollständig durch Cer substituiert ist.

4. Wärmedämmschicht nach vorhergehendem Anspruch, bei dem Zirkon in einem Bereich von 5 bis 95 %, insbesondere in einem Bereich von 40 bis 60 % durch Cer substituiert ist.

5. Wärmedämmschicht nach einem der vorhergehenden Ansprüche 1 bis 4, bei dem Cer überstöchiometrisch Zirkon substituiert.

6. Wärmedämmschicht basierend auf einem La₂Zr₂O₇, welcher auf der Oberfläche eines metallischen Substrates angeordnet ist, insbesondere nach Anspruch 1 oder 2, bei dem Zirkon teilweise durch Hafnium substituiert ist.

7. Wärmedämmschicht nach vorhergehendem Anspruch, bei dem Zirkon in einem Bereich von 5 bis 95 %, insbesondere in einem Bereich von 40 bis 60 % durch Hafnium substituiert ist.

8. Wärmedämmschicht basierend auf einem La₂Zr₂O₇, welcher auf der Oberfläche eines metallischen Substrates angeordnet ist, insbesondere nach Anspruch 1 oder 2, bei dem Zirkon zumindest teilweise durch Tantal substituiert ist.

9. Wärmedämmschicht nach einem der vorhergehenden Anspüche 1 bis 8 mit einer 50 %-igen Substitution des Zirkons durch Ce oder Hf.

10. Wärmedämmschicht nach einem der vorhergehenden Ansprüche 1 bis 9,
**gekennzeichnet durch**
eine Wärmeleitfähigkeit von weniger als 1,5 W/mK.

## Claims

1. Heat insulation layer based on a La₂Zr₂O₇, which is arranged on the surface of a metal substrate, **characterised by** a 10 to 90% substitution of the lanthanum by neodymium, dysprosium, samarium or europium.

2. Heat insulation layer according to previous claim 1, **characterised by** a 50% substitution of the lanthanum by neodymium, dysprosium, samarium or europium.

3. Heat insulation layer based on a La₂Zr₂O₇, which is arranged on the surface of a metal substrate, particularly according to claim 1 or 2, in which zircon is substituted partly or completely by Cer.

4. Heat insulation layer according to the previous claim, in which zircon is substituted by Cer in a region of 5 to 95%, particularly in a region of 40 to 60%.

5. Heat insulation layer according to one of previous claims 1 to 4, in which Cer substitutes zircon superstoichiometrically.

6. Heat insulation layer based on a La₂Zr₂O₇, which is arranged on the surface of a metal substrate, particularly according to claim 1 or 2, in which zircon is substituted partly by hafnium.

7. Heat insulation layer according to previous claim 1, in which zircon is substituted by hafnium in a region of 5 to 95%, particularly in a region of 40 to 60%.

8. Heat insulation layer based on a La₂Zr₂O₇, which is arranged on the surface of a metal substrate, particularly according to claim 1 or 2, in which zircon is substituted at least partly by tantalum.

9. Heat insulation layer according to one of previous claims 1 to 8 with a 50% substitution of zircon by Ce or Hf.

10. Heat insulation layer according to one of previous claims 1 to 9,
**characterised by**
a heat conductivity of less than 1.5 W/mK.

## Revendications

1. Couche calorifuge à base de La₂Zr₂O₇ qui est disposée sur la surface d'un substrat métallique, **caractérisée par** une substitution de 10 à 90 % du lanthane par du néodyme, du dysprosium, du samarium ou de l'europium.

2. Couche calorifuge selon la revendication précédente 1, **caractérisée par** une substitution de 50 % du lanthane par du néodyme, du dysprosium, du samarium ou de l'europium.

3. Couche calorifuge à base de La₂ZR₂O₇, qui est disposée sur la surface d'un substrat métallique, notamment selon la revendication 1 ou 2, dans le cadre de laquelle le zirconium est substitué partiellement ou totalement par du Cer.

4. Couche calorifuge selon la revendication précédente, dans le cadre de laquelle le zirconium est substitué dans une plage de 5 à 95 %, notamment dans une plage de 40 à 60 %, par du Cer.

5. Couche calorifuge selon l'une quelconque des revendications précédentes 1 à 4, dans le cadre de laquelle le Cer se substitue de manière plus que stoechiométrique au zirconium.

6. Couche calorifuge à base de La₂Zr₂O₇, qui est disposée sur la surface d'un substrat métallique, notamment selon la revendication 1 ou 2, dans le cadre de laquelle le zirconium est substitué partiellement par du hafnium.

7. Couche calorifuge selon la revendication précédente, dans le cadre de laquelle le zirconium est substitué dans une plage de 5 à 95 %, notamment dans une plage de 40 à 60 %, par du hafnium.

8. Couche calorifuge à base de La₂Zr₂O₇, qui est disposée sur la surface d'un substrat métallique, notamment selon la revendication 1 ou 2, dans le cadre de laquelle le zirconium est substitué au moins partiellement par du tantale.

9. Couche calorifuge selon l'une quelconque des revendications précédentes 1 à 8, présentant une substitution de 50 % du zirconium par du Ce ou du Hf.

10. Couche calorifuge selon l'une quelconque des revendications précédentes 1 à 9,
**caractérisée par**
une conductivité thermique de moins de 1,5 W/mK.
